# EUROPÄISCHE PATENTSCHRIFT

(11) **EP 2 020 198 B1**
(45) Veröffentlichungstag und Bekanntmachung des Hinweises auf die Patenterteilung: **12.06.2013**
(21) Anmeldenummer: 08013056.0
(22) Anmeldetag: 19.07.2008
(51) Int. Cl.: A47J 31/44, A47J 31/46, B67D 1/00

(54) **Verfahren und Vorrichtung zum Fördern von Lebensmitteln**
Method and device for supplying food
Procédé et dispositif destinés à transporter des produits alimentaires

(30) Priorität: 03.08.2007 DE 102007036816
(43) Veröffentlichungstag der Anmeldung: 04.02.2009
(73) Patentinhaber: FRANKE Kaffeemaschinen AG, 4663 Aarburg (CH)
(72) Erfinder: Peden, Ray, Everett, WA 98201 (US); Probst, Roman, Seattle WA 98119 (US)
(74) Vertreter: Lemcke, Brommer & Partner

(56) Entgegenhaltungen:
- DE-A1- 4 338 173
- US-A- 6 142 063

## Beschreibung

Die Erfindung betrifft eine Vorrichtung und ein Verfahren zum Fördern von flüssigen Lebensmitteln gemäß den Oberbegriffen der Ansprüche 1 und 13.

Bei solchen Vorrichtungen wird mittels einer Pumpe ein flüssiges Lebensmittel aus einem Behälter befördert. Gleichzeitig wird mittels eines Sensors der Füllstand des Behälters überwacht, so dass bei leerem Behälter oder zumindest bei Unterschreiten eines niedrigen Füllstandes der Pumpvorgang unterbrochen werden kann.

Ein typisches Anwendungsgebiet für solche Vorrichtungen sind Kaffeemaschinen, bei denen zusätzlich zu dem von einer Brüheinheit erzeugten Kaffee auch andere flüssige Lebensmittel in eine Tasse ausgegeben werden sollen, wie beispielsweise Milch und/oder Sirup. Solche Kaffeemaschinen weisen typischerweise eine Kühleinheit auf, in der z.B. ein Milchbehälter gelagert wird. Aus dem Milchbehälter wird Milch je nach Bedarf abgepumpt, wobei bei leerem Behälter der Pumpvorgang unterbrochen wird, so dass die Pumpe nicht "trocken läuft", das heißt nicht ohne Flüssigkeitsförderung betrieben wird.

Hierbei ist bekannt, den Füllstand des Behälters mittels eines am Behälter angeordneten kapazitativen Widerstandes zu überwachen. Befindet sich kein flüssiges Lebensmittel mehr in dem Behälter, so ändert sich der Widerstandswert des kapazitativen Widerstandes, so dass abhängig von den Messsignalen des Widerstandes der Pumpvorgang unterbrochen werden kann.

Problematisch bei solchen Vorrichtungen ist, dass die Funktionalität der Füllstandsüberwachung von der Anordnung zwischen kapazitativen Widerstand und Behälter abhängig ist und dass darüber hinaus die Messung ungenau ist, so dass häufig der Pumpvorgang abgebrochen wird, obwohl sich noch ein erheblicher Rest des flüssigen Lebensmittels in dem Behälter befindet. Des Weiteren stellt die Ansteuerung und Überwachung des kapazititativen Widerstandes eine hohe Anforderung an das Steuersystem dar, so dass eine genaue Kalibrierung notwendig ist und leicht Dejustierungen auftreten können.

DE 43 381 73 A1 offenbart ein Gerät zum Aufbrühen eines Erzeugnisses, beispielsweise Kaffee, wobei durch eine Druckmessung in einem geschlossenen Raum der Flüssigkeitsstand in einem Behälter ermittelt wird, aufgrund der Druckänderung eines Luftvolumens in einer Röhre bei Änderung der Wasserhöhe in dem Behälter.

US 6,142,063 beschreibt eine Vorrichtung zum Aufbrühen von Kaffee, bei der mittels einer Luftpumpe Luft zu einem wasserenthaltenden Vorratstank zuführbar ist. In einer Luftzuführleitung zwischen Pumpe und Vorratstank ist ein Drucksensor zur Druckmessung angeordnet.

Typischerweise werden als Behälter für die flüssigen Lebensmittel Behälter aus flexiblen Materialen, wie beispielsweise Plastikbeutel, verwendet, so dass mit Entnahme des flüssigen Lebensmittels sich auch das Gesamtvolumen des Behälters verringert.

Der Erfindung liegt die Aufgabe zugrunde, die bekannten Vorrichtungen zum Fördern von flüssigen Lebensmitteln dahingehend zu verbessern, dass zum einen eine kostengünstige und gleichzeitig hinreichend genaue Überwachung des Füllstandes des Behälters für flüssige Lebensmittel möglich ist. Weiterhin soll die Überwachung möglichst robust sein, das heißt Dejustierungen und daraus resultierende notwendige Nachkalibrierungen sollen vermieden werden und Verfälschungen der Messungen aufgrund von äußeren Einflüssen sollen verringert werden.

Gelöst ist diese Aufgabe durch eine Vorrichtung zum Fördern von flüssigen Lebensmitteln gemäß Anspruch 1, sowie durch ein Verfahren zum Fördern von flüssigen Lebensmitteln gemäß Anspruch 11.

Vorteilhafte Ausgestaltungen der Vorrichtung findet sich in den Ansprüchen 2 bis 10; vorteilhafte Ausgestaltungen des Verfahrens finden sich in Anspruch 12.

Die erfindungsgemäße Vorrichtung zum Fördern von flüssigen Lebensmitteln umfasst somit eine Pumpe, welche mit einem Behälter für flüssige Lebensmittel verbindbar ist derart, dass mittels der Pumpe das flüssige Lebensmittel aus dem Behälter gefördert werden kann.

Typische flüssige Lebensmittel sind hierbei wie bereits erwähnt insbesondere Milch, wobei die erfindungsgemäße Vorrichtung auch zum Fördern beliebiger anderer flüssiger Lebensmittel geeignet ist, insbesondere auch Flüssigkeiten mit einer wesentlichen höheren Viskosität, wie beispielsweise Sirup.

Der Füllstand des Behälters für das flüssige Lebensmittel wird mittels eines Sensors überwacht, wobei bei Unter- oder Überschreiten einer vorgegebenen Messsignalgrenze des Sensors der Pumpvorgang unterbrochen wird.

Wesentlich ist, dass der Sensor als Drucksensor ausgebildet ist. Dieser Drucksensor ist derart angeordnet, dass mittels Drucksensors der Druck in dem Behälter für flüssige Lebensmittel messbar ist.

Im Unterschied zum Vorbekannten Stand der Technik erfolgt die Messung somit nicht mittels eines kapazitativen Widerstandes, sondern mittels einer Druckmessung des Druckes in dem Behälter für flüssige Lebensmittel. Bei leerem oder annähernd leerem Behälter ändert sich der Druck in dem Behälter, so dass aufgrund dieser Druckänderung der leere Behälter detektiert und der Pumpvorgang unterbrochen werden kann.

Weiterhin weist die Pumpe einen Saugeingang und eine Saugleitung auf. Die Saugleitung ist einerseits mit dem Saugeingang der Pumpe verbunden und andererseits mit dem Behälter für flüssige Lebensmittel verbindbar. Im normalen Betrieb wird somit mittels der Pumpe durch die Saugleitung das flüssige Lebensmittel aus dem Behälter herausgesaugt. Bei Verwendung von flexiblen Behältern wird der Behälter hierbei komprimiert, so dass der Druck in dem Behälter annähernd konstant ist. Insbesondere ist es vorteilhaft, einen flexiblen Behälter zu verwenden, der lediglich einen mit der Saugleitung verbundenen Auslass besitzt. Beim Fördern von Flüssigkeit aus diesem Behälter über die Saugleitung wird der Behälter somit komprimiert, da keine Luft aus der Umgebung in den Behälter eindringen und die herausgesaugte Flüssigkeit ersetzen kann. Das Gesamtvolumen des Behälters verringert sich somit beim Heraussaugen der Flüssigkeit.

Bei leerem Behälter erzeugt die Pumpe aufgrund des Saugvorgangs jedoch einen Unterdruck, welcher durch den Drucksensor detektiert wird. Dies ist eindeutiges Anzeichen für einen leeren Behälter, so dass abhängig von dem gemessenem Druck - das heißt bei Vorliegen eines Unterdrucks gegenüber der Umgebung - eindeutig ein leerer Behälter detektiert wird und der Pumpvorgang unterbrochen werden kann.

Der Drucksensor kann grundsätzlich an jeder Stelle angeordnet werden, an der eine Druckverbindung zu dem Behälter stattfindet und somit eine Messung des Drucks in dem Behälter möglich ist.

Bei der erfindungsgemäßen Vorrichtung ist der Drucksensor an der Saugleitung angeordnet, so dass mittels des Drucksensors der Druck in der Saugleitung und damit auch der Druck in dem Behälter messbar ist.

Hierdurch wird ein Austausch des Behälters vereinfacht, denn es muss lediglich der Behälter von der Saugleitung entfernt und durch einen neuen, vollen Behälter ersetzt werden, ohne dass eine neue Anordnung des Drucksensors notwendig ist.

Vorteilhafterweise ist die Saugleitung als Leitung mit drei Öffnungen ausgeführt. Diese Leitung ist mit einer ersten Öffnung mit dem Behälter für flüssige Lebensmittel verbindbar, mit einer zweiten Öffnung mit dem Saugeingang der Pumpe verbunden und der Drucksensor ist an einer dritten Öffnung der Leitung angeordnet.

Zur Verringerung des Strömungswiderstandes ist es vorteilhaft, wenn zwischen erster Öffnung und zweiter Öffnung eine etwa gradlinige Verbindung besteht. Hierdurch kann das flüssige Lebensmittel im Wesentlichen gradlinig, das heißt ohne größere Strömungsturbulenzen von dem Behälter für flüssige Lebensmittel zu der Pumpe gelangen, so dass der Strömungswiderstand minimiert ist.

Insbesondere ist es vorteilhaft, die Leitung als T-Leitung auszuführen: Die Verbindung zur Dritten Öffnung, an der der Drucksensor angeordnet ist, ist vorteilhafterweise in etwa rechtwinklig zu der gradlinigen Verbindung zwischen erster und zweiter Öffnung angeordnet, so dass die T-Leitung in etwa der Form eines "T" entspricht.

Letzteres führt zu dem weiteren Vorteil, dass aufgrund der Strömung von dem Behälter zu der Pumpe das flüssige Lebensmittel den Vakuumsensor nicht mit hohem Strömungsdruck anströmt, so dass eine Verfälschung der Messung vermieden wird.

Für eine kompakte Bauweise der erfindungsgemäßen Vorrichtung ist es vorteilhaft, die Saugleitung als Y-Leitung, d.h. als Leitung in Form eines "Y" mit drei Öffnungen auszuführen, da dann der Drucksensor nahe an den restlichen Armen der Saugleitung angeordnet werden kann. Vorteilhafterweise werden an den benachbarten Armen die Pumpe und der Drucksensor angeschlossen und an dem dritten Arm der Behälter.

Bei der Ausführung der Saugleitung als T- oder Y-Leitung kann in dem Arm, an dessen Ende der Drucksensor angeordnet ist, je nach Strömungsgeschwindigkeit und Abmessung der Leitung flüssiges Lebensmittel verbleiben, welches nicht durch aus dem Behälter nachströmendes fluides Lebensmittel ausgetauscht wird. Daher ist vorteilhaft, wenn dieses Teilstück der T-Leitung oder Y-Leitung, welches die Dritte Öffnung mit der Verbindung zwischen der ersten und der zweiten Öffnung verbindet, möglichst kurz ausgeführt ist. Untersuchungen der Anmelderin haben ergeben, dass eine Länge von weniger als 20 cm, insbesondere weniger als 10 cm, höchstinsbesondere weniger als 5 cm dieses Teilstücks vorteilhaft ist.

Wie vorhergehend beschrieben erzeugt die Pumpe in dem Behälter und der Saugleitung bei leerem Behälter einen Unterdruck. Die Vorrichtung ist vorteilhafterweise daher derart ausgeführt, dass bei Unterschreiten eines vorgegebenen Druck-Grenzwertes an dem Drucksensor der Pumpvorgang unterbrochen wird.

Untersuchungen der Anmelderin haben ergeben, dass Vorteilhafterweise die Vorrichtung derart ausgeführt ist, dass ein Druck-Grenzwert im Bereich von -2,5 psi (etwa -0,172 bar) bis -12,5 psi (etwa -0,862 bar) wahlweise vorgebbar ist.

Die Druckwerte sind als negative Zahlen angegeben um zu verdeutlichen, dass es sich um Unterdruck gegenüber dem in der Umgebung herrschenden Druck handelt. Beträgt der Umgebungsdruck beispielsweise 14,5 psi (etwa 1 bar), so liegt ein Unterdruck von mindestens -2,5 psi bei Druckwerten kleiner gleich 12 psi (etwa 0,826 bar) und von mindestens -12,5 psi bei Druckwerten kleiner gleich 2 psi (etwa 0,138 bar) vor.

In diesem Fall kann der Anwender somit zwischen den vorgegebenen Grenzwerten einen Druck-Grenzwert vorgeben, der an eventuelle Spezifikationen, wie beispielsweise spezielle Ausgestaltungen des Behälters für das flüssige Lebensmittel oder an die Viskosität des flüssigen Lebensmittels angepasst ist.

Untersuchungen der Anmelderin haben jedoch ergeben, dass für typische Anwendungsbereiche feste Grenzwerte vorgegeben werden können. Die Vorrichtung ist Vorteilhafterweise daher derart ausgeführt, dass ein Druck-Grenzwert im Bereicht -2,5 psi bis -12,5 psi fest vorgegeben ist, insbesondere ergaben Versuche der Anmelderin, dass ein vorgegebener Druck-Grenzwert von etwa -5 psi (etwa -0,345 bar) sinnvoll ist. Auch hier ist durch die Minuszeichen angegeben, dass es sich bei den angegebenen Druckwerten um einen Unterdruck gegenüber dem in der Umgebung herrschenden Druck handelt.

In dieser Vorteilhaften Ausgestaltung ist somit keine Eingabe des Druck-Grenzwertes durch den Anwender notwendig, die Vorrichtung schaltet automatisch bei einem Unterdruck kleiner -5 psi den Pumpvorgang ab.

Die Wahl des Druck-Grenzwertes auf -5 psi weist den Vorteil auf, dass insbesondere bei der Förderung von Milch der Pumpvorgang durch diese Wahl des Druck-Grenzwertes dann unterbrochen wird, wenn zwar der Milchbeutel leer oder nahezu leer ist, die Milchleitungen der Vorrichtung, insbesondere die zuvor beschriebene T-Leitung jedoch noch mit dem flüssigen Lebensmittel, wie beispielsweise Milch, gefüllt sind. Nach einem Austausch des Behälters entstehen somit keine Luftblasen in den Leitungen so dass ein Entlüften oder "primen" entfällt.

Wie vorhergehend beschrieben wird somit nicht der absolute Druck in dem Behälter, sondern der Differenzdruck zur Umgebung gemessen.

Ebenso liegt es jedoch auch im Rahmen der Erfindung, statt eines Differenzdruckes den absoluten Druck in dem Behälter zu messen und entsprechend als Grenzwerte absolute Druckgrenzwerte anzugeben. Da der Normaldruck etwa 14,5 psi (etwa 1 bar) beträgt, ist die Vorgabe von absoluten Grenzwerten zwischen 12 psi (etwa 0,826 bar) und 2 psi (etwa 0,138 bar) sinnvoll, insbesondere die Vorgabe von 9,5 psi (etwa 0,655 bar).

Ein typisches Anwendungsgebiet für die Erfindungsgemäße Vorrichtung stellen Kaffeemaschinen dar, insbesondere Kaffeevollautomaten für größere Mengen, wie sie zum Beispiel in Gaststätten Verwendung finden.

Eine solche Kaffeemaschine umfasst eine Brüheinheit zum Erzeugen von Kaffee. Die Brüheinheit kann derart ausgebildet sein, dass fertig gebrühter Kaffee Warmgehalten und je nach Bedarf ausgegeben wird oder das beispielsweise nach Bedarf frisch Kaffeebohnen gemahlen und aufgebrüht werden. Wesentlich ist, dass die Kaffeemaschine eine Vorrichtung zum Fördern von flüssigen Lebensmitteln umfasst, so dass beispielsweise Milch dem Kaffee zuführt werden kann, gegebenenfalls in Form von Milchschaum nach Durchlaufen eines Milchaufschäumers.

Eine solche Kaffeemaschine ist vorteilhafterweise derart ausgeführt, dass die Vorrichtung zum Fördern von flüssigen Lebensmitteln gemäß der erfindungsgemäßen Vorrichtung ausgeführt ist, das heißt insbesondere den Füllstand des Behälters für flüssige Lebensmittel mittels eines Drucksensors überwacht.

Eine solche Kaffeemaschine umfasst typischerweise eine Steuereinheit, welche je nach Bedarf Milch von der Vorrichtung zum Fördern von flüssigen Lebensmitteln anfordert. Wird nun während des Förderns der von der Steuereinheit angeforderten Milch der Behälter vollständig entleert, so entsteht wie vorhergehend beschrieben ein Unterdruck in dem Behälter, welcher durch den Drucksensor detektiert wird. Vorteilhafterweise ist der Drucksensor mit der Steuereinheit der Kaffeemaschine verbunden, so dass durch die Steuereinheit zum einen der Brühvorgang unterbrochen werden kann und zum anderen ist die Steuereinheit auch mit der Pumpe der Vorrichtung zum Fördern von flüssigen Lebensmitteln verbunden, so dass ebenfalls der Pumpvorgang unterbrochen wird.

Vorzugsweise ist die Steuereinheit derart ausgeführt, dass bei Unterschreiten des Vorgegebenen Druckgewindes im Behälter, das heißt bei leerem Behälter ein optisches und/oder akustisches Signal ausgegeben wird, so dass der Benutzer den Behälter austauschen kann.

Vorhergehend wurde die Verwendung der erfindungsgemäßen Vorrichtung in einer Kaffeemaschine zum Fördern von Milch beschrieben. Ebenso ist jedoch auch die Verwendung der erfindungsgemäßen Vorrichtung zum Fördern beliebiger anderer Lebensmittel, insbesondere auch von Sirup denkbar.

Ebenso liegt es im Rahmen der Erfindung, eine Kaffeemaschine mit mehreren Behältern für flüssige Lebensmittel zu versehen, aus denen wahlweise von der Steuereinheit der Kaffeemaschine flüssige Lebensmittel angefordert werden können.

Hierbei ist es denkbar, dass eine Pumpe über ein Ventilsystem mit mehreren Behältern verbunden ist, so dass mittels der Steuereinheit die Ventile derart eingestellt werden, dass die Pumpe das gewünschte Lebensmittel aus dem gewünschten Behälter fördert. Dies ergibt den Vorteil, dass in der Saugleitung unmittelbar vor der Pumpe lediglich ein Vakuumsensor notwendig ist, um den Füllstand des Behälters, aus dem aktuell das flüssige Lebensmittel entnommen wird, zu überwachen.

Ebenso ist es auch denkbar, für jeden Behälter einen eigenen Vakuumsensor oder für jeden Behälter eine eigene Milchpumpe und einen eigenen Vakuumsensor vorzusehen.

Weitere vorteilhafte Ausgestaltungen werden nachfolgend an einem Ausführungsbeispiel beschrieben. Dabei zeigt:

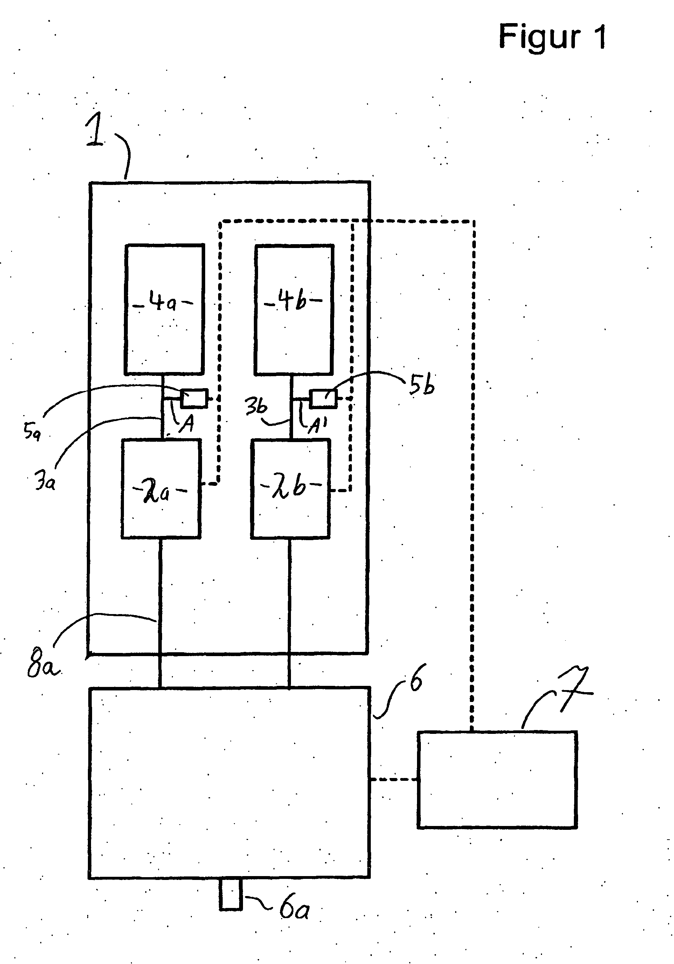

Figur 1 eine Kaffeemaschine mit einer erfindungsgemäßen Vorrichtung zum Fördern von flüssigen Lebensmitteln.

Die in Figur 1 dargestellte Kaffeemaschine umfasst eine Vorrichtung zum Fördern von flüssigen Lebensmitteln 1, welche zwei Pumpen 2a und 2b umfasst. Jede Pumpe ist mittels einer als T-Leitung ausgeführten Saugleitung 3a, 3b mit jeweils einem Behälter für flüssige Lebensmittel 4a, 4b verbunden.

Der Behälter 4a ist ein Milchbeutel, der Vollmilch enthält, wohingegen der Behälter 4b ein Milchbeutel ist, der entfettete Milch enthält.

Die Saugleitungen 3a und 3b sind jeweils mit der ersten Öffnung mit den Behältern 4a und 4b verbunden und mit den zweiten Öffnungen mit den Milchpumpen 2a und 2b. Hierbei sind die Saugleitungen 3a und 3b derart ausgeführt, dass die Verbindung zwischen der ersten und der zweiten Öffnungen geradlinig ist, so dass ein möglichst geringer Strömungswiderstand beim Strömen der Milch aus den Behältern zu den Milchpumpen vorliegt.

An der dritten Öffnung der Säugleitungen 3a und 3b sind Drucksensoren 5a und 5b angeordnet, wobei dasjenige Teilstück der Saugleitung, welches die dritte Öffnung mit der Verbindung zwischen der ersten und der zweiten Öffnung verbindet (als Teilstück A und A' in Figur 1 gekennzeichnet) eine Länge von weniger als 1 cm aufweißt, so dass in diesen Teilstück nur eine vernachlässigbar geringe Menge von Milch verbleibt.

Weiterhin stehen die Teilstücke A und A' rechtwinklig zu der geradlinigen Verbindung zwischen erster und zweiter Öffnung der Saugleitungen 3a und 3b, so dass aufgrund der Strömung der Flüssigkeit nur ein vernachlässigbarer Strömungsdruck auf die Drucksensoren 5a und 5b entsteht und somit keine Verfälschung der Druckmessung erfolgt.

Die in Figur 1 dargestellte Kaffeemaschine umfasst ferner eine Brüheinheit 6, sowie eine Steuereinheit 7.

Die Steuereinheit 7 ist über gestrichelt dargestellte Steuerleitungen mit der Brüheinheit 6, sowie mit der Vorrichtung zum Fördern von flüssigen Lebensmitteln 1 (jeweils mit den Pumpen 2a und 2b, sowie den Drucksensoren 5a und 5b) verbunden und in ihr sind mehrere Programme für unterschiedliche Getränke, wie beispielsweise Cappuccino, Milchkaffee etc. hinterlegt.

Wählt der Benutzer an der Steuereinheit 7 mittels einer (nicht dargestellten) Eingabeeinheit beispielsweise Milchkaffee (mit Vollmilch) aus, so steuert die Steuereinheit 7 die Brüheinheit 6 derart, dass an dem Auslass 6a zunächst eine vorbestimmte Menge Kaffee ausgegeben wird, welche in etwa einer ¾ Tassenfüllung entspricht. Anschließend steuert die Steuereinheit 7 die Pumpe 2a der Vorrichtung zum Fördern von flüssigen Lebensmitteln 1 derart, dass aus dem Behälter 4a Vollmilch über die Saugleitung 3a entnommen wird und über eine Druckleitung 8a zu der Brüheinheit 6 ausgegeben wird. In der Brüheinheit 6 befindet sich eine (nicht dargestellte) Verbindung zu dem Auslass 6a, so dass die Vollmilch ebenfalls über den Auslass 6a in die Tasse abgegeben wird.

Wenn während des Pumpvorgangs der Behälter 4a vollständig entleert wird, so entsteht ein Unterdruck in dem Behälter 4a und in der Saugleitung 3a und damit auch an dem Drucksensor 5a.

Die Drucksensoren 5a und 5b sind ebenfalls mit der Steuereinheit 7 verbunden und die Steuereinheit 7 ist derart eingestellt, dass sie bei einem Unterdruck von mindestens -5 psi den Pumpvorgang abbricht.

Im vorliegenden Beispiel unterbricht die Steuereinheit 7 somit den Pumpvorgang durch die Pumpe 2a und gibt über eine (nicht dargestellte) Anzeigeeinheit ein Signal aus, dass der Behälter 4a für Vollmilch ersetzt werden muss.

Sobald der Behälter für Vollmilch ersetzt ist, bestätigt der Benutzer dies mit der Eingabeeinheit der Steuereinheit 7, so dass der Pumpvorgang fortgesetzt werden kann und die Zubereitung des Milchkaffees abgeschlossen wird.

Analog erfolgt die Überwachung des Füllstandes des Behälters 4b.

Für die Verbindung der Saugleitungen 3a und 3b mit den Behältern 4a und 4b ist es wesentlich, dass diese Druckdicht sind. Ist die Vorrichtung beispielsweise zur Verwendung von Behältern mit Schraubverschlüssen ausgebildet, so weisen die Saugleitungen 3a und 3b entsprechende Gegenstücke zum Aufschrauben auf die Schraubverschlüsse der Behälter 4a und 4b auf, so dass mittels Aufschrauben eine Druckdichte Verbindung herstellbar ist.

Sofern die erfindungsgemäße Vorrichtung zum Fördern von Flüssigkeiten mit höherer Viskosität, wie beispielsweise Sirup, verwendet wird ist es wesentlich, dass insbesondere die Saugleitungen 3a und 3b einen ausreichenden Durchmesser aufweisen. Hierbei sollte die Verbindung von der ersten zur zweiten Öffnung der Saugleitungen durchgängig mindestens einen Durchmesser von 3/8" (etwa 0,9525 cm) aufweisen. Die Verbindung zur dritten Öffnung, an der die Drucksensoren 5a und 5b angeordnet sind, kann demgegenüber einen geringeren Durchmesser aufweisen, der jedoch mindestens %" (etwa 0,635 cm) betragen sollte.

Vorhergehend ist das in Figur 1 dargestellte Ausführungsbeispiel derart beschrieben, dass die Behälter 4a und 4b unterschiedliche Milcharten enthalten. Ebenso liegt es jedoch im Rahmen der Erfindung, mehrere Behälter mit gleichen flüssigen Lebensmitteln zu verwenden, beispielsweise dass sowohl der Behälter 4a, als auch der Behälter 4b Vollmilch enthält.

Die Steuerung 7 ist vorteilhafterweise derart ausgeführt, dass zunächst der Behälter 4a mittels der Pumpe 2a bedarfsweise geleert wird und sobald mittels des Drucksensors 5a ein leerer Behälter 4a detektiert wird, schaltet die Steuerung 7a auf die Pumpe 2b um, so dass ohne Unterbrechung des Zubereitungsvorgangs des Getränks von dem (nun leeren) Behälter 4a auf den (vollen) Behälter 4b umgeschaltet wird.

Gleichzeitig gibt die Steuereinheit 7 ein akustisches und/oder optisches Signal aus, dass der Behälter 4a leer ist, so dass während des Betriebs der Kaffeemaschine der Behälter 4a ausgetauscht werden kann, da während des Austauschvorgangs bei Bedarf Milch aus dem Behälter 4b gefördert wird.

Analog erfolgt bei leerem Behälter 4b ein automatisches Umschalten auf den Behälter 4a durch die Steuereinheit 7 und es wird ein entsprechendes optisches und/oder akustisches Signal ausgegeben, dass der Behälter 4b leer ist.

## Patentansprüche

1. Vorrichtung (1) zum Fördern von flüssigen Lebensmitteln, insbesondere von Milch oder Sirup, umfassend
mindestens eine Pumpe (2a, 2b), welche mit mindestens einem Behälter (4a, 4b) für flüssige Lebensmittel verbindbar ist, derart, dass mittels der Pumpe das flüssige Lebensmittel aus dem Behälter förderbar ist und mindestens einen Sensor (5a, 5b) zum Messen des Füllstandes des Behälters für flüssige Lebensmittel,
wobei die Vorrichtung derart ausgeführt ist, dass abhängig von den Messsignalen des Sensors bei Unter- oder Überschreiten einer vorgegebenen Messsignalgrenze der Pumpvorgang unterbrochen wird,
wobei der Sensor (5a, 5b) als Drucksensor ausgebildet ist und der Drucksensor derart angeordnet ist, dass mittels des Drucksensors der Druck in dem Behälter (4a, 4b) für flüssige Lebensmittel messbar ist, wobei die Pumpe (2a, 2b) einen Saugeingang und eine Saugleitung (3a, 3b) aufweist, wobei die Saugleitung einerseits mit dem Saugeingang verbunden ist und andererseits mit dem Behälter (4a, 4b) für flüssige Lebensmittel verbindbar ist;
**dadurch gekennzeichnet,**
**dass** der Drucksensor (5a, 5b) an der Saugleitung angeordnet ist, derart, dass mittels des Drucksensors der Druck in der Saugleitung (3a, 3b) messbar ist.

2. Vorrichtung nach Anspruch 1,
**dadurch gekennzeichnet,**
**dass** die Saugleitung (3a, 3b) als Leitung mit drei Öffnungen ausgeführt ist, wobei eine erste Öffnung mit dem Behälter (4a, 4b) für flüssige Lebensmittel verbindbar ist, eine zweite Öffnung mit dem Saugeingang der Pumpe (2a, 2b) verbunden ist und der Drucksensor (5a, 5b) an einer dritten Öffnung der Leitung angeordnet ist,
insbesondere, dass die Saugleitung (3a, 3b) als T-Leitung oder als Y-Leitung ausgeführt ist.

3. Vorrichtung nach Anspruch 2,
**dadurch gekennzeichnet,**
**dass** die T-Leitung derart ausgeführt ist, dass zwischen erster und zweiter Öffnung eine in etwa geradlinige Verbindung besteht, insbesondere dass die Verbindung zur dritten Öffnung in etwa rechtwinklig zu der geradlinigen Verbindung zwischen erster und zweiter Öffnung steht.

4. Vorrichtung nach einem der Ansprüche 1 bis 3,
**dadurch gekennzeichnet,**
**dass** das Teilstück (A, A') der T-Leitung oder der Y-Leitung, welches die dritte Öffnung mit der Verbindung zwischen der ersten und zweiten Öffnung verbindet, eine Länge von weniger als 20 cm, insbesondere weniger als 10 cm, höchstinsbesondere weniger als 5 cm aufweist.

5. Vorrichtung nach einem der vorangegangenen Ansprüche,
**dadurch gekennzeichnet,**
**dass** die Vorrichtung derart ausgeführt ist, dass der Pumpvorgang unterbrochen wird, wenn der Drucksensor einen Unterdruck unter einem vorgegebenen Druck-Grenzwert misst.

6. Vorrichtung nach Anspruch 5,
**dadurch gekennzeichnet,**
**dass** die Vorrichtung derart ausgeführt ist, dass der Druck-Grenzwert im Bereich - 2.5 psi (ca. -0,172 bar) bis -12.5 psi (ca. -0,862 bar) wahlweise vorgebbar ist.

7. Vorrichtung nach Anspruch 5,
**dadurch gekennzeichnet,**
**dass** die Vorrichtung derart ausgeführt ist, dass ein Druck-Grenzwert im Bereich -2.5 psi (ca. -0,172 bar) bis -12.5 psi (ca. -0,862 bar) vorgegeben ist, insbesondere, dass ein Druck-Grenzwert von etwa -5 psi (ca. - 0,345 bar) vorgegeben ist.

8. Kaffeemaschine, umfassend
eine Brüheinheit (6) zum Erzeugen von Kaffee und eine Vorrichtung (1) zum Fördern von flüssigen Lebensmitteln, wobei die Vorrichtung zum Fördern von flüssigen Lebensmitteln, folgende Elemente umfasst:
- mindestens eine Pumpe (2a, 2b), welche mit mindestens einem Behälter (4a, 4b) für flüssige Lebensmittel verbindbar ist, derart, dass mittels der Pumpe das flüssige Lebensmittel aus dem Behälter förderbar ist und
- mindestens einen Sensor (5a, 5b) zum Messen des Füllstandes des Behälters für flüssige Lebensmittel,
wobei die Vorrichtung derart ausgeführt ist, dass abhängig von den Messsignalen des Sensors bei Unter- oder Überschreiten einer vorgegebenen Messsignalgrenze der Pumpvorgang unterbrochen wird und wobei die Kaffeemaschine derart ausgeführt ist, dass der von der Brüheinheit (6) erzeugte Kaffee und das von der Pumpe geförderte flüssige Lebensmittel an einem gemeinsamen Ausgabeort (6a) oder an benachbarten Ausgabeorten ausgebbar sind,
**dadurch gekennzeichnet,**
**dass** die Vorrichtung zum Fördern von flüssigen Lebensmitteln gemäß einem der Ansprüche 1 bis 7 ausgeführt ist.

9. Kaffeemaschine nach Anspruch 8,
**dadurch gekennzeichnet,**
**dass** die Kaffeemaschine eine Steuereinheit (7) umfasst, welche mit dem Drucksensor (5a, 5b) und der Pumpe (2a, 2b) verbunden und derart ausgeführt ist, dass abhängig von den Signalen des Drucksensors bei Unterschreiten eines vorgegebenen Druckes in dem Behälter (4a, 4b) für flüssige Lebensmittel der Pumpvorgang unterbrechbar ist, insbesondere, dass die Steuereinheit (7) zusätzlich mit der Brüheinheit (6) verbunden und derart ausgeführt ist, dass bei Unterschreiten eines vorgegebenen Druckes in dem Behälter für flüssige Lebensmittel sowohl der Pumpvorgang, als auch der Brühvorgang unterbrechbar ist.

10. Kaffeemaschine nach Anspruch 9,
**dadurch gekennzeichnet,**
**dass** mittels der Steuereinheit (7) bei Unterschreiten eines vorgegebenen Druckes in dem Behälter (4a, 4b) für flüssige Lebensmittel ein optisches und/oder akustisches Signal ausgebbar ist..

11. Verfahren zum Fördern von flüssigen Lebensmitteln, insbesondere von
Milch oder Sirup,
folgende Schritte umfassend:
- Fördern eines flüssigen Lebensmittels aus einem Behälter (4a, 4b) mittels einer Pumpe (2a, 2b) und Überwachen des Füllstandes des Behälters mittels eines Sensors (5a, 5b),
- Unterbrechen des Pumpvorganges, wenn die Messsignale des Sensors einen vorgegebenen Signalwert Unter- oder Überschreiten,
wobei der Füllstand des Behälters derart überwacht wird, dass der Druck in dem Behälter mittels eines Drucksensors gemessen wird,
**dadurch gekennzeichnet,**
**dass** abhängig von den Messsignalen des Drucksensors bei Unterschreiten eines vorgegebenen Druckes der Pumpvorgang unterbrochen wird, wobei der Pumpvorgang unterbrochen wird, wenn der Unterdruck in dem Behälter (4a, 4b) mindestens -2.5 psi (ca. -0,172 bar) beträgt.

12. Verfahren nach Anspruch 11,
**dadurch gekennzeichnet,**
**dass** der Pumpvorgang unterbrochen wird, wenn der Unterdruck in dem Behälter (4a, 4b) mindestens -5 psi (ca. -0,345 bar) beträgt.

## Claims

1. Device (1) for conveying liquid foodstuffs, especially milk or syrup, comprising
at least one pump (2a, 2b) which is connectible to at least one container (4a, 4b) for liquid foodstuffs in such a way that, by means of the pump, the liquid foodstuff is conveyable out of the container, and at least one sensor (5a, 5b) for measuring the fill level of the container for liquid foodstuffs,
wherein the device is configured in such a way that, in dependence upon the measurement signals of the sensor, the pumping operation is interrupted when the measurement signal falls below or exceeds a preset measurement signal threshold,
wherein the sensor (5a, 5b) is in the form of a pressure sensor and the pressure sensor is arranged in such a way that, by means of the pressure sensor, the pressure in the container (4a, 4b) for liquid foodstuffs can be measured,
wherein the pump (2a, 2b) has a suction input and a suction line (3a, 3b), the suction line on the one hand being connected to the suction input and on the other hand being connectible to the container (4a, 4b) for liquid foodstuffs;
**characterised in that**
the pressure sensor (5a, 5b) is arranged on the suction line in such a way that by means of the pressure sensor the pressure in the suction line (3a, 3b) can be measured.

2. Device according to claim 1,
**characterised in that**
the suction line (3a, 3b) is in the form of a line having three openings, a first opening being connectible to the container (4a, 4b) for liquid foodstuffs, a second opening being connected to the suction input of the pump (2a, 2b), and the pressure sensor (5a, 5b) being arranged at a third opening of the line,
the suction line (3a, 3b) especially being in the form of a T-line or in the form of a Y-line.

3. Device according to claim 2,
**characterised in that**
the T-line is configured in such a way that there is an approximately straight-line connection between the first and second openings, the connection to the third opening especially being approximately at a right angle to the straight-line connection between the first and second openings.

4. Device according to any one of claims 1 to 3,
**characterised in that**
the portion (A, A') of the T-line or Y-line that connects the third opening to the connection between the first and second openings has a length of less than 20 cm, especially less than 10 cm, more especially less than 5 cm.

5. Device according to any one of the preceding claims,
**characterised in that**
the device is configured in such a way that the pumping operation is interrupted when the pressure sensor measures a reduced pressure below a preset pressure threshold value.

6. Device according to claim 5,
**characterised in that**
the device is configured in such a way that the pressure threshold value can be preset as desired in the range from -2.5 psi (approximately -0.172 bar) to -12.5 psi (approximately -0.862 bar).

7. Device according to claim 5,
**characterised in that**
the device is configured in such a way that a pressure threshold value in the range from -2.5 psi (approximately -0.172 bar) to -12.5 psi (approximately -0.862 bar) is preset, there especially being preset a pressure threshold value of about -5 psi (approximately -0.345 bar).

8. Coffee machine, comprising
a brewing unit (6) for producing coffee and a device (1) for conveying liquid foodstuffs, wherein
the device for conveying liquid foodstuffs comprises the following elements:
- at least one pump (2a, 2b) which is connectible to at least one container (4a, 4b) for liquid foodstuffs in such a way that, by means of the pump, the liquid foodstuff is conveyable out of the container, and
- at least one sensor (5a, 5b) for measuring the fill level of the container for liquid foodstuffs,
the device being configured in such a way that, depending upon the measurement signals of the sensor, the pumping operation is interrupted when the measurement signal falls below or exceeds a preset measurement signal threshold, and
the coffee machine being configured in such a way that the coffee produced by the brewing unit (6) and the liquid foodstuff delivered by the pump can be dispensed at a common dispensing location (6a) or at neighbouring dispensing locations,
**characterised in that**
the device for conveying liquid foodstuffs is configured in accordance with any one of claims 1 to 7.

9. Coffee machine according to claim 8,
**characterised in that**
the coffee machine comprises a control unit (7) which is connected to the pressure sensor (5a, 5b) and the pump (2a, 2b) and is configured in such a way that, in dependence upon the signals of the pressure sensor, the pumping operation can be interrupted when the pressure in the container (4a, 4b) for liquid foodstuffs falls below a preset pressure, the control unit (7) especially additionally being connected to the brewing unit (6) and being configured in such a way that when the pressure in the container for liquid foodstuffs falls below a preset pressure both the pumping operation and the brewing operation can be interrupted.

10. Coffee machine according to claim 9,
**characterised in that**
by means of the control unit (7) an optical and/or acoustic signal can be emitted when the pressure in the container (4a, 4b) for liquid foodstuffs falls below a preset pressure.

11. Method of conveying liquid foodstuffs, especially milk or syrup, comprising the following steps:
- conveying a liquid foodstuff out of a container (4a, 4b) by means of a pump (2a, 2b) and monitoring the fill level of the container by means of a sensor (5a, 5b),
- interrupting the pumping operation when the measurement signals of the sensor fall below or exceed a preset signal value,
the fill level of the container being monitored by measuring the pressure in the container by means of a pressure sensor, **characterised in that**
in dependence upon the measurement signals of the pressure sensor, the pumping operation is interrupted when the pressure falls below a preset pressure, the pumping operation being interrupted when the reduced pressure in the container (4a, 4b) is at least -2.5 psi (approximately -0.172 bar).

12. Method according to claim 11,
**characterised in that**
the pumping operation is interrupted when the reduced pressure in the container (4a, 4b) is at least -5 psi (approximately -0.345 bar).

## Revendications

1. Dispositif (1) pour transporter des produits alimentaires liquides, en particulier du lait ou du sirop, comprenant
au moins une pompe (2a, 2b), qui peut être reliée à au moins un récipient (4a, 4b) pour produits alimentaires liquides de telle sorte que le produit alimentaire liquide peut être transporté hors du récipient au moyen de la pompe,
et au moins un capteur (5a, 5b) pour mesurer le niveau de remplissage du récipient pour produits alimentaires liquides,
sachant que le dispositif est conçu de telle sorte que l'opération de pompage est interrompue en fonction des signaux de mesure du capteur, en cas de passage en dessous ou au-dessus d'une limite prédéfinie de signal de mesure,
sachant que le capteur (5a, 5b) est réalisé sous forme de capteur de pression et que le capteur de pression est disposé de telle sorte que la pression dans le récipient (4a, 4b) pour produits alimentaires liquides peut être mesurée au moyen du capteur de pression,
sachant que la pompe (2a, 2b) présente une entrée d'aspiration et une conduite d'aspiration (3a, 3b), sachant que la conduite d'aspiration, d'une part est reliée à l'entrée d'aspiration et d'autre part peut être reliée au récipient (4a, 4b) pour produits alimentaires liquides,
**caractérisé en ce que** le capteur de pression (5a, 5b) est disposé sur la conduite d'aspiration de telle sorte que la pression dans la conduite d'aspiration (3a, 3b) peut être mesurée au moyen du capteur de pression.

2. Dispositif selon la revendication 1, **caractérisé en ce que** la conduite d'aspiration (3a, 3b) est réalisée sous forme de conduite à trois ouvertures, sachant qu'une première ouverture peut être reliée au récipient (4a, 4b) pour produits alimentaires liquides, qu'une deuxième ouverture peut être reliée à l'entrée d'aspiration de la pompe (2a, 2b) et que le capteur de pression (5a, 5b) est disposé sur une troisième ouverture de la conduite,
en particulier **en ce que** la conduite d'aspiration (3a, 3b) est réalisée sous forme de conduite en T ou sous forme de conduite en Y.

3. Dispositif selon la revendication 2, **caractérisé en ce que** la conduite en T est réalisée de telle sorte qu'il existe entre la première et la deuxième ouverture une liaison approximativement rectiligne, en particulier de telle sorte que la liaison vers la troisième ouverture est approximativement perpendiculaire à la liaison rectiligne entre la première et la deuxième ouverture.

4. Dispositif selon l'une des revendications 1 à 3, **caractérisé en ce que** le tronçon partiel (A, A') de la conduite en T ou de la conduite en Y qui relie la troisième ouverture à la liaison entre la première et la deuxième ouverture présente une longueur inférieure à 20 cm, en particulier inférieure à 10 cm, d'une manière encore plus particulière inférieure à 5 cm.

5. Dispositif selon l'une des revendications précédentes, **caractérisé en ce que** le dispositif est conçu de telle sorte que l'opération de pompage est interrompue si le capteur de pression mesure une pression négative inférieure à une valeur limite prédéfinie de pression.

6. Dispositif selon la revendication 5, **caractérisé en ce que** le dispositif est conçu de telle sorte la valeur limite de pression peut être prédéfinie à volonté dans la plage de -2,5 psi (environ -0,172 bar) à -12,5 psi (environ -0,862 bar).

7. Dispositif selon la revendication 5, **caractérisé en ce que** le dispositif est conçu de telle sorte qu'une valeur limite de pression est prédéfinie dans la plage de -2,5 psi (environ -0,172 bar) à -12,5 psi (environ -0,862 bar), en particulier de telle sorte qu'une valeur limite de pression d'environ -5 psi (environ -0,345 bar) est prédéfinie.

8. Machine à café, comprenant une unité d'infusion (6) pour produire du café et un dispositif (1) pour transporter des produits alimentaires liquides,
sachant que le dispositif pour transporter des produits alimentaires liquides comprend les éléments suivants :
- au moins une pompe (2a, 2b), qui peut être reliée à au moins un récipient (4a, 4b) pour produits alimentaires liquides de telle sorte que le produit alimentaire liquide peut être transporté hors du récipient au moyen de la pompe,
- au moins un capteur (5a, 5b) pour mesurer le niveau de remplissage du récipient pour produits alimentaires liquides,
sachant que le dispositif est conçu de telle sorte que l'opération de pompage est interrompue en fonction des signaux de mesure du capteur, en cas de passage en dessous ou au-dessus d'une limite prédéfinie de signal de mesure,
et sachant que la machine à café est conçue de telle sorte que le café produit par l'unité d'infusion (6) et le produit alimentaire liquide transporté par la pompe peuvent être délivrés en un point de délivrance commun (6a) ou en des points de délivrance voisins, **caractérisée en ce que** le dispositif pour transporter des produits alimentaires liquides est réalisé selon l'une des revendications 1 à 7.

9. Machine à café selon la revendication 8, **caractérisée en ce que** la machine à café comprend une unité de commande (7) qui est reliée au capteur de pression (5a, 5b) et à la pompe (2a, 2b) et qui est conçue de telle sorte que l'opération de pompage peut être interrompue en fonction des signaux du capteur de pression, en cas de passage en dessous d'une pression prédéfinie dans le récipient (4a, 4b) pour produits alimentaires liquides, en particulier **en ce que** l'unité de commande (7) est en outre reliée à l'unité d'infusion (6) et est conçue de telle sorte que tant l'opération de pompage que l'opération d'infusion peut être interrompue en cas de passage en dessous d'une pression prédéfinie dans le récipient pour produits alimentaires liquides.

10. Machine à café selon la revendication 9, **caractérisée en ce qu'**un signal optique et/ou acoustique peut être délivré au moyen de l'unité de commande (7) en cas de passage en dessous d'une pression prédéfinie dans le récipient (4a, 4b) pour produits alimentaires liquides.

11. Procédé pour transporter des produits alimentaires liquides, en particulier du lait ou du sirop,
comprenant les étapes suivantes :
- transport d'un produit alimentaire liquide hors d'un récipient (4a, 4b) au moyen d'une pompe (2a, 2b), et surveillance du niveau de remplissage du récipient au moyen d'un capteur (5a, 5b),
- interruption de l'opération de pompage si les signaux de mesure du capteur passent en dessous ou au-dessus d'une valeur de signal prédéfinie,
sachant que le niveau de remplissage du récipient est surveillé en mesurant la pression dans le récipient au moyen d'un capteur de pression,
**caractérisé en ce que** l'opération de pompage est interrompue en fonction des signaux de mesure du capteur de pression, en cas de sous-dépassement d'une pression prédéfinie, sachant que l'opération de pompage est interrompue si la pression négative dans le récipient (4a, 4b) est d'au moins -2,5 psi (environ -0,172 bar).

12. Procédé selon la revendication 11, **caractérisé en ce que** l'opération de pompage est interrompue si la pression négative dans le récipient (4a, 4b) est d'au moins -5 psi (environ -0,345 bar).
